**Europäisches Patentamt**

(19) **European Patent Office**

**Office européen des brevets**

(11) Publication number: **0 104 714**

**B1**

(12) **EUROPEAN PATENT SPECIFICATION**

(45) Date of publication of patent specification: **19.08.87**

(51) Int. Cl.⁴: **B 60 G 11/22, B 60 B 33/04**

(21) Application number: **83303235.2**

(22) Date of filing: **03.06.83**

(54) **Wheel suspension with eccentric shear disc.**

(30) Priority: **30.08.82 US 432890**

(43) Date of publication of application:
**04.04.84 Bulletin 84/14**

(45) Publication of the grant of the patent:
**19.08.87 Bulletin 87/34**

(84) Designated Contracting States:
**DE FR GB IT SE**

(56) References cited:
**GB-A- 924 558**
**US-A-1 734 326**
**US-A-2 285 656**
**US-A-2 669 448**
**US-A-2 700 173**
**US-A-3 072 169**
**US-A-4 188 048**

(73) Proprietor: **FORD MOTOR COMPANY LIMITED**
**Eagle Way**
**Brentwood Essex CM13 3BW (GB)**
(84) **GB**

(73) Proprietor: **FORD-WERKE**
**AKTIENGESELLSCHAFT**
**Ottoplatz 2 Postfach 21 03 69**
**D-5000 Köln 21 (DE)**
(84) **DE**

(73) Proprietor: **FORD FRANCE SOCIETE ANONYME**
**344 Avenue Napoléon Bonaparte B.P. 307**
**F-92506 Rueil Malmaison Cedex (FR)**
(84) **FR**

(73) Proprietor: **Ford Motor Company**
**The American Road**
**Dearborn, MI 48121 (US)**
(84) **IT SE**

(72) Inventor: **Huang, Bernard**
**6146 Willow Creek Drive**
**Canton Michigan 48187 (US)**
Inventor: **Milenkovic, Veliko**
**3719 Peabody Drive**
**Birmingham Michigan 48010 (US)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**0 104 714**

(74) Representative: **Messulam, Alec Moses et al
A. Messulam & Co. 24 Broadway
Leigh on Sea Essex SS9 1BN (GB)**

# 0 104 714

## Description

Technical field

This invention relates to wheels and, more particularly, to resiliently cushioned wheels.

Background art

Relatively hard, high capacity tires are often used in transport devices such as carts or industrial lift trucks used in production facilities of any number of products. While the use of such tires reduces rolling resistance and increases the load capacity of the cart, they produce a relatively hard ride for operator of the vehicle. Further, the shock loading imposed on cart components such as the axle and frame when the wheel goes over bumps or other irregular surfaces, tends to be relatively high and causes relatively fast wear of the wheel, the cart components, and the floor.

Improved suspensions for in-plant dollies or other in-plant transportation vehicles have typically employed relatively expensive and elaborate spring suspension systems which can be likened to those of the automobile. Clearly, it would be desirable to reduce the wear on the cart wheels and on the floor without incurring substantial expense for an improved suspension. These are some of the problems this invention overcomes.

U.S. Patent US—A—3,072,169 issued to R. Hastings, Jr. on January 8, 1963 and entitled "Resilient Wheel" teaches a wheel which has a shearing ring bonded between the wheel and the axle. The axle is not movable with respect to the axle mounting and the shear member is mounted between the wheel and the axle. As a result, increasing the size of the shear member necessitates the corresponding increase in the size of the wheel. Such an increase is undesirable because it adds weight and typically requires more substantial ball bearing for supporting the wheel. Again, all this adds to the cost of the suspension. Further, the patent only teaches a linear suspension wherein there is only provided the same amount of resilient resistance even as the wheel approaches the absolute limit of its travel. Thus, when the wheel does reach the limit of its travel, there may be an undesirably large shock loading.

U.S. Patent US—A—2,700,173 issued to L. D. Huffman on January 25, 1955 and entitled "Cushioned Caster" teaches a relatively complex cushioning mechanism whereby the axle of the caster wheel is offset from a torsional cushioning member and swings with respect to the torsional cushioning member. The complexity of the cushioning mechanism results in a corresponding increase in cost. A U.S. Patent to Chestnut, US—A—1,734,326 issued November 5, 1929 and entitled "Caster Wheel" attempts to provide some of the cushioning through the tread and thus avoid the problem of having a hard tire altogether. However, such a solution also reduces the load capacity of the caster wheel. U.S. Patent US—A—2,669,448 issued to W. W. Cushman on February 16, 1964 and U.S. Patent US—A—629,229 issued to C. Ballin on July 18, 1899 teach suspension systems including rubber balls which are required to twist and turn as the wheel turns with respect to the wheel mounting. Again, a relatively simple and less expensive solution would be desirable.

U.S. Patent US—A—4,188,048, corresponding to the preamble of claim 1, teaches a wheel suspension for reducing shock loading and increasing floor and wheel wear life. The suspension includes a pair of spaced walls resiliently supporting a wheel therebetween. An elongated axle extends through opposed openings in the side walls so that the axle has end portions extending beyond the side walls. A wheel is rotationally mounted on the axle between the side walls. A pair of resilient means coupling end portions of the axle to an adjacent one of the side plates each include a pair of spaced cover plates attached to an elastomer therebetween. One of the cover plates is also attached to the axle and the other cover plate is also attached to one of the side walls so that movement of the axle in a radial direction with respect to the side walls applies a shear force to the elastomer.

Such a nonlinear suspension is particularly advantageous for reducing axle movement as the limit of axle travel is approached. A plurality of elastomer members coupled between the side walls and the axle with separating disks positioned between each of the adjacent elastomer members generate a non-constant force to deflection ratio which increases with the approach of the limit of axle travel. The separating disks are sized so as to succeedingly land on the axle as the axle travels for increasing load. That is, increasing deflection of the axle more than proportionately increases the deflection resisting force supplied by the elastomer members to limit travel of the axle.

This provides a relatively inexpensive way for damping or cushioning wheels thereby increasing the life of the wheels. A nonlinear suspension substantially reduces the occurrence of any shock caused by the axle reaching the limit of its travel.

However, although the wheel suspension taught in U.S. Patent US—A—4,188,048 provides an improvement, it is sometimes difficult to retrofit this suspension to an existing cart. For example, the suspension may mount the wheel too high between the spaced side walls so that there is interference with the object supported by the suspension. Additionally, the side walls extending downward may interfere with rails in which the wheels are to run. Still further, it may be desirable to increase the suspension travel distance for the axle while retaining the same exterior dimensions for the suspension. An increased suspension travel distance can provide more cushioning without increasing size of the suspension. These are some of the problems this invention overcomes.

According to the present invention there is provided a wheel suspension for an object having a

3

# 0 104 714

suspension support means for attaching said wheel suspension to the object, an elongated axle for providing an axis of rotation, a wheel rotationally mounted on the axle said wheel suspension including resilient means for coupling the axle to the suspension support means said resilient means including a plurality of elastomer members and connecting means for attaching adjacent elastomer members to each other, said connecting means being deflectable by said axle so that a shear deformation occurs to said elastomer members, characterised by said connecting means having an eccentric configuration with respect to each other so that radial axle movement to a point of interference is a different distance in at least two opposing directions.

This invention recognizes that a wheel suspension for reducing shock loading and increasing floor and wheel wear life can provide generally annular cover plates resiliently coupled to each other, the cover plates being radially offset one from another to provide eccentric openings. An axle passing eccentrically through an opening has more radial suspension travel than an axle going concentrically through an opening of the same size. Thus, for a given size opening in a given size cover plate there is increased travel for an eccentrically mounted axle with respect to a concentrically mounted axle. Additionally, as a result, the wheel is mounted lower with respect to the supported object thus increasing clearance for projections extending from the object toward the wheel as well as for projections extending up from the travel surface of the wheel toward the suspended object. Alternatively, smaller diameter cover plates can be used with an eccentric system than with a concentric system having the same amount of suspension travel. The smaller diameter cover plates can also increase ground clearance.

The invention will now be described further by way of example with reference to the accompanying drawings in which:

Figure 1 is a front sectional view of a wheel suspension in accordance with an embodiment of this invention wherein three pairs of elastomer disks are used to provide a nonlinear suspension force;

Figure 2 is a side elevation view of the wheel suspension of Figure 1;

Figure 3 is one side of the wheel suspension shown in Figure 1 at the limit of suspension travel wherein the elastomer members are subjected to shear;

Figures 4A (prior art) and 4B show a concentric and an eccentric suspension system, respectively, and the increased travel of the eccentric suspension system, Figure 4B being taken substantially along section IVB—IVB of Figure 1;

Figs. 5A (prior art) and 5B show a concentric and an eccentric suspension system, respectively, and the increased clearance between the wheel and the suspended object of the eccentric system;

Figs. 6A (prior art) and 6B show a concentric and an eccentric suspension system, respectively, and the increased ground clearance associated with the eccentric system; and

Figs. 7A (prior art) and 7B show a fully deflected concentric and eccentric suspension system, respectively, each having the same amount of suspension travel so that the eccentric suspension system has a smaller outer diameter and increased ground clearance than the concentric suspension system.

Best mode for carrying out the invention

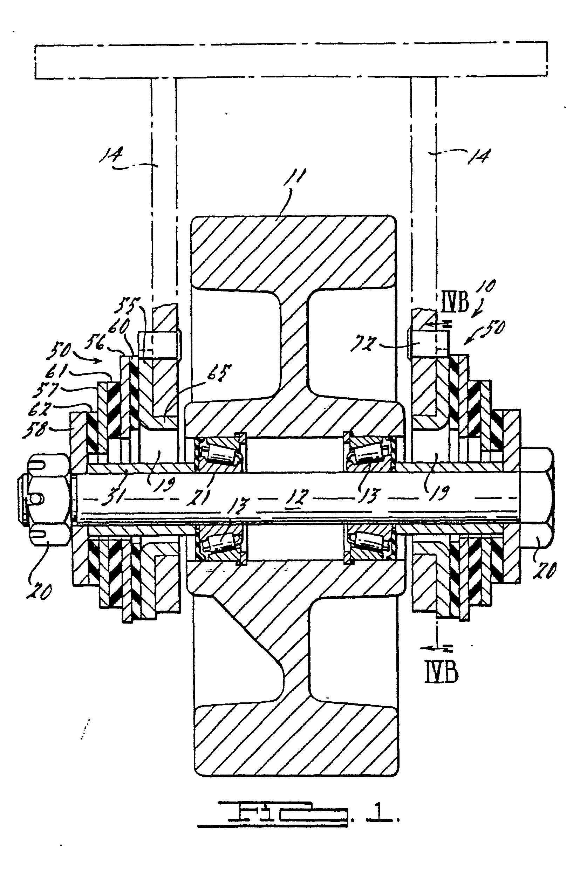

Referring to Fig. 1, a wheel suspension 10 includes a wheel 11 which rotates an axle 12. Axle 12 passes through a pair of aligned and opposing openings 19 and a pair of spaced planar and a generally parallel side walls 14. Bearings 13 are mounted within a central axial opening 21 of wheel 11 and are adjacent to the outer surface of axle 12. A resilient connection 50 is positioned between the ends of axle 12 and side walls 14. Nuts 20 are at the end of axle 12 and provide a compression force on resilient connection 50.

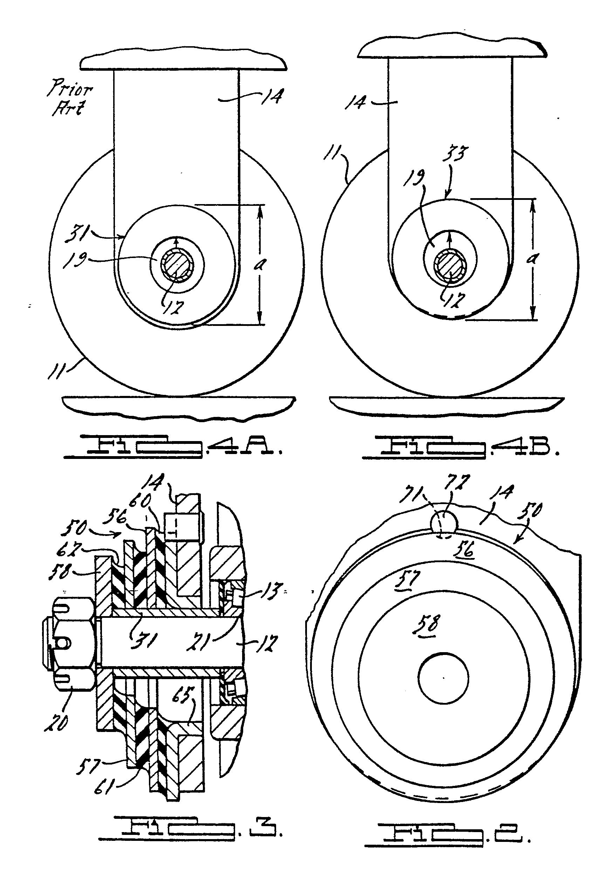

Resilient connection 50 includes three pairs of spaced elastomeric members 60, 61 and 62 and four pairs of cover plates 55, 56, 57 and 58. Cover plates 55, 56, 57 and 58 each have a central axial opening defining an inner diameter and a circular periphery defining an outer diameter. Inner cover plates 55 each have protruding annular bosses 65 for sitting in openings 19 of side walls 14. The cover plates are positioned eccentrically with respect to each other so that the center of cover plate 56 is lower than the center of cover plate 55, the center of cover plate 57 is lower than the center of cover plate 56, and the center of cover plate 58 is lower than the center of cover plate 57 (Fig. 2). Thus elastomeric members 60, 61 and 62 have inside and outside diameters eccentric to each other. A bushing 31 is positioned around the ends of axle 12 in resilient member 50 thereby providing a sleeve for axle 12. The eccentric configuration eliminates substantially all the space below bushing 31 and the lower inside portion of resilient connection 50. That is, if the system were concentric without the offsets of the cover plates, the space below bushing 31 would equal the space above bushing 31 shown in Fig. 1. As a result, the inside and outside diameters of the cover plates and the elastomeric members can be reduced, there can be increased clearance between the resilient connection and the travel surface for the wheel, and increased clearance between the top of the wheel and the lowest portion of the supported member at the top of side plates 14.

The pair of cover plates 55 is adjacent to the exterior of side walls 14 around openings 19. Continuing successively outward from cover plates 55, there is a pair of elastomeric members 60, a pair of cover plates 56, a pair of elastomeric members 61, a pair of cover plates 57, a pair of elastomeric members 62, and a pair of cover plates 58. Nuts 20 abut the outermost extremity of resilient connection 50 and can be tightened to apply compressive force to resilient connection 50. Elastomeric members 60, 61 and 62 are each bonded to the adjacent cover plates 55 through 58 so that deflection of cover plates 55 through 58 causes a shear force to be applied to elastomeric members 60, 61 and 62.

4

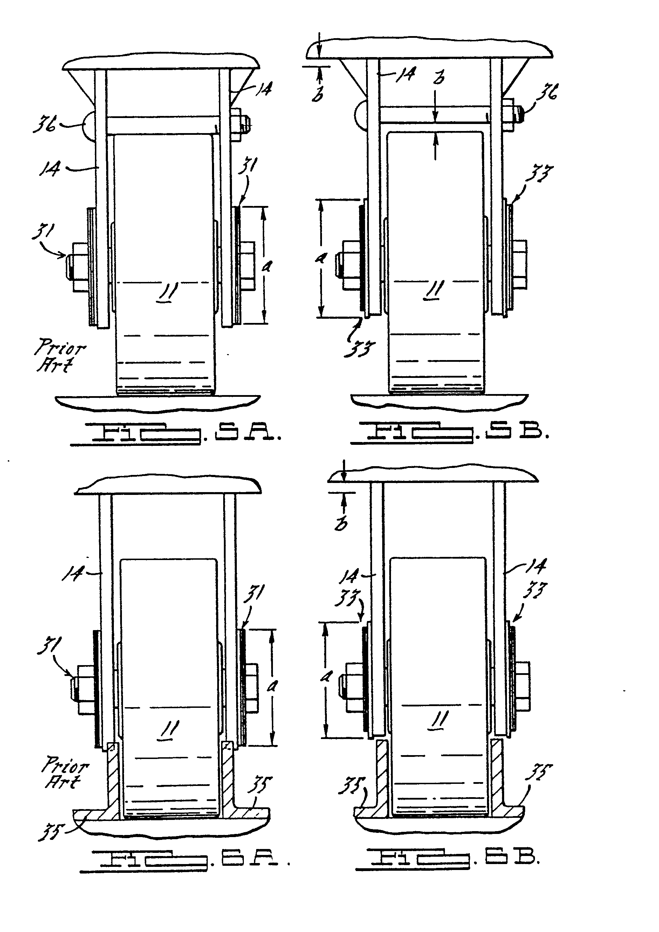

Both the elastomeric members and the cover plates have decreasing diameters as resilient connection 50 extends outwardly from side walls 14 to the connection with axle 12. The inner diameter of outermost cover plates 58 is substantially equal to the outer diameter of bushing 31 around axle 12 and responds immediately to movement of axle 12. The deflection created by such movement is applied primarily to the adjacent elastomeric members 62. However, lower rates of shear deformation are also applied to elastomeric members 61 and 60. When axle 12 has deflected sufficiently to engage the larger inner diameter of the next innermost cover plates 57, then cover plates 57 also move with further movement of axle 12. As a result there is no further increase in the applied shear force to elastomeric members 62 but there is an increase in the applied shear force in the elastomeric members 61 inward of cover plates 57. Similarly, when deflection of axle 12 is such that the outer surface of bushing 31 around axle 12 strikes the inner diameter of cover plates 56, there is no further increase in the shear force applied to pairs of elastomeric members 61 and 62 but there is additional shear force applied to elastomeric members 60. Finally, when the outer surface of bushing 31 around axle 12 reaches the innermost diameter of cover plates 55 no further increase in the shear forces is applied to elastomeric members 60, 61 and 62 and no further deflection of axle 12 may be realized. Fig. 3 shows the maximum deflection of axle 12 and elastomeric members 60, 61 and 62 under maximum shear.

The above-described sequence in the increase in stiffness introduced successively by stopping elastomeric members 60, 61 and 62 from further deformation provides a nonlinear suspension system. That is, when the two cover plates adjacent an elastomeric member both contact bushing 31 around axle 12 there is no further deformation of the elastomeric member between the cover plates and wheel suspension has an increased stiffness. Such a suspension system is particularly advantageous because there can be effective damping of a relatively broad range of travel of axle 12 without it being necessary to have a particularly high force resisting deflection at the beginning of travel of axle 12. Instead, there can be a substantial increase in the damping force as axle 12 approaches the end of its travel.

Advantageously, cover plates 55 through 58 are made of a metal which is nonresilient and is easily attached to both side walls 14 and elastomeric members 60, 61 and 62. Elastomeric members 60 through 62 are sufficiently resilient that the opposing major faces of each member can be displaced with respect to each other by distances equal to the differences between gaps upward from the axle adjacent the cover plates. That is, following the direction of suspension travel, the elastomeric member must be able to absorb the difference in movement of adjacent cover plates which is equal to the difference in radial spacing between the upper interior boundaries of adjacent cover plates. The material of the elastomeric member is chosen so that for this displacement there is a desired shear force resistance. The size and the numbers of layers of elastomer will be determined for each application according to the payload range and the desired dynamic characteristics of the system which includes the caster and the payload.

Referring to Fig. 2, an end view of resilient member 50 shows the offset of the concentric cover plates 55, 56, 57 and 58. Additionally, an indentation 71 at the top edge of cover plate 55 aligns with a pin 72 protruding from the side of the side member 14. The correct rotational orientation of resilient member 50 is important so that the offset centers of cover members 55 through 58 are along the line of suspension travel of axle 12. That is, if the line of suspension travel is angled with respect to the line connecting the centers of the cover plates travel distance is reduced from its maximum possible. Reduced suspension travel limits performance of the suspension system. The extreme case would be if resilient member 50 were mounted upside down so that there would be essentially no suspension travel. Although the cover plates could have an outer periphery which is eccentric with respect to the periphery of the central opening of the same cover plate, fabrication is easier with concentric, annular cover plates. With eccentric cover plates it would be necessary to make sure each cover plate is in the correct relative rotational position with respect to the other cover plate. With concentric cover plates the relative rotational position of each cover plate is not important.

The amount of shear stiffness applied by elastomeric members 60, 61 and 62 is also dependent upon the radial extent of each of the members. As shown in Fig. 1, the outer diameters of elastomeric members 60 through 62 are also decreased in accordance with the decreasing inner diameters of the elastomeric members 60 through 62. However, because of the offset of the intervening cover plates the inner and outer diameters of the elastomeric members 60 through 62 are eccentric with respect to one another. The outer diameters of cover plates 55 through 58 also decrease. It should be recognized that the force resisting deflection provided by resilient connection 50 can be varied by varying the outer diameter of the elastomeric members and cover plates. Further, the inner and outer diameters of each of the cover plates and each of the elastomeric members need not be constant with axial distance along axle 12. For example, the outer diameter of elastomeric members may vary so that there is a smooth connection between the outer diameters of adjacent cover plates.

The elastomeric members in accordance with this invention do not rotate and as such are not subject to varying deflection as a function of the speed of rotation. Such deflection causes heat loss due to such reasons as hysteresis which results in energy being dissipated without performing useful suspension work or forward travel. The nonrotating elastomeric rings are flexed only when a load is applied to the wheel and there is no deflection as a result of wheel rotation alone. Further, the relative position of the elastomeric members with respect to the wheel suspension is advantageous in that there is sufficient room radially outward and axially outward for a variety of elastomeric configurations.

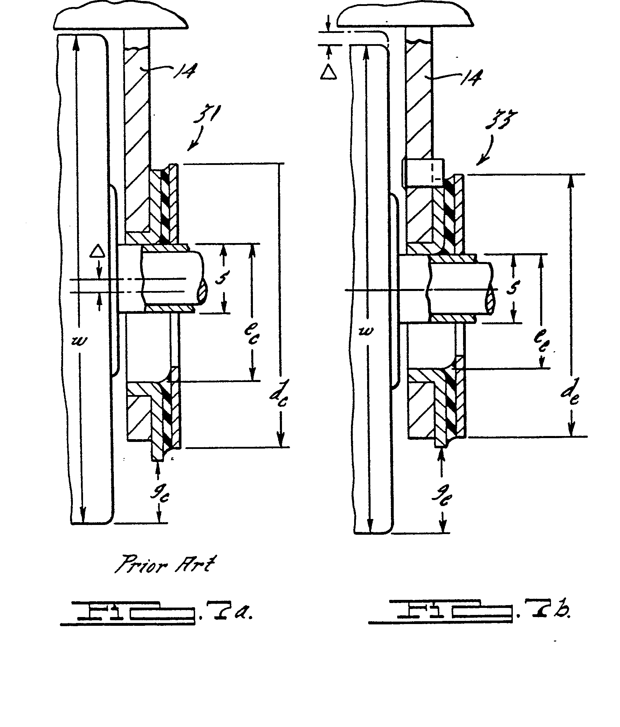

If only one elastomeric member is used, such as indicated in Figs. 4B, 5B and 6B, the wheel suspension provides a linear suspension or damping force when deflection of the wheel causes the deflection of the axle. That is, the travel of the axle is radially limited by the radially most inward portion of the axially innermost cover plate and the opening in the side wall. Elastomeric members are bonded to both the adjacent surfaces of the cover plates so that movement of the outermost cover plates is damped or resisted in that a shear force is applied to the elastomeric member. Advantageously, at least one nut 20 has internal threads mating with external threads on axle 12 so that nuts 20 can be tighted toward each other and apply a compressive force on the elastomeric members. Such a compressive force can be used to reinforce the bonding between elastomeric members and cover plates of the wheel suspension.

Referring to Figs. 4A and 4B, increased travel is possible with an eccentric system 33 having the same outer diameter "a" as concentric system 31. Concentric system 31 shown in Fig. 4A positions axle 12 in the middle of a circular opening 19 in side wall 14. Thus, the travel of axle 12 is about half the diameter of the opening less half the diameter of the axle. In contrast, in the eccentric system 33 of Fig. 4B, axle 12 is positioned lower in opening 19 in side wall 14. Thus, the travel of axle 12 can approach the length of the diameter of opening 19 less the diameter of axle 12.

Referring to Figs. 5A and 5B, concentric system 31 shown in Fig. 5A mounts wheel 11 higher than eccentric system 33 shown in Fig. 5B. When mounting concentric suspension system 31 on an existing side wall 14 there is less clearance between the object to be supported, for example, a cart, and the top of the wheel. An existing bolt 36 is located on side wall 14 at the same relative position from the supported cart in both Figs. 5A and 5B. Wheel 11 supported by concentric system 31 touches bolt 36. Wheel 11 supported by eccentric system 33 clears bolt 36 by a distance "b". Also, eccentric system 33 provides longer suspension travel than concentric system 31 even though the exterior diameters of both are "a".

Similarly, with respect to Figs. 6A and 6B, concentric system 31 of Fig. 6A does not provide as much clearance from the bottom of side wall 14 to the floor as does the eccentric system. This may be particularly critical when the suspension system is used on a cart designed to run in existing rails 35 on a floor. In Fig. 6A, concentric system 31 causes side wall 14 to interfere with rails 35. In Fig. 6B, concentric system 33 causes side wall 14 to clear rails 35. Again, eccentric system 33 also provides longer suspension travel than converter system 31 even though the exterior diameters of both are "a".

Typical dimensions for resilient member 50 are:

| Cover plate | Inside diameter mm (inches) | Outside diameter mm (inches) | Offset from centerline of 55 mm (inches) | Thickness |
|---|---|---|---|---|
| 55 | 41.13 (1.62) | 98.51 (3.88) | 0 | 4.75 (.187) |
| 56 | 36.31 (1.43) | 96.74 (3.81) | 0.76 (.03) | 3.173 (.125) |
| 57 | 31.74 (1.25) | 85.82 (3.38) | 3.04 (.12) | 3.173 (.125) |
| 58 | 19.42 (.765) | 69.82 (2.75) | 4.57 (.18) | 4.75 (.187) |

Eccentric suspension system 33 shown in Fig. 7B has the same amount of suspension travel as concentric suspension system 31 shown in Fig. 7A. However, eccentric suspension system 33 provides increased ground clearance and increased wheel clearance while having a smaller outer diameter than concentric suspension system 31. Further, the opening required in side wall 14 is smaller for eccentric system 33 than concentric suspension system 31. Thus there may be caster side walls which are not wide enough to provide holes to support a concentric suspension system, but are wide enough to support an eccentric suspension system. The concentric and eccentric suspension systems 31 and 33 shown in Figs. 7A and 7B are both in a loaded, fully deflected condition. The additional wheel clearance, $\Delta$, is equal to one-half of the difference between the hole diameters of the inner most cover plates of the two suspension systems, i.e. $\Delta=\frac{1}{2}(e_c-e_e)$. Eccentric system 33 uses smaller diameter cover plates with smaller diameter holes than concentric system 31 having the same amount of suspension travel. Thus, even though eccentric suspension system 33 has a smaller outer diameter, the area of the cover plate between the opening and the outer diameter which determines the amount of elastomer between the cover plates can be the same as in the larger concentric suspension system 31. Thus the amount of elastomer and the damping characteristics of the concentric and eccentric suspension systems 31 and 33 can be substantially equal.

The increase in ground clearance of concentric system 31 is equal to the increased wheel clearance plus one-half the difference between the outer diameters of the concentric and eccentric systems, i.e.

$$g_c = \tfrac{1}{2}w - \tfrac{1}{2}d_c - e_c + \tfrac{1}{2}s$$
$$= \tfrac{1}{2}(w - d_c - e_c + s)$$

$$g_e = \tfrac{1}{2}w - \tfrac{1}{2}d_e - \tfrac{1}{2}e_e + \tfrac{1}{2}s$$
$$= \tfrac{1}{2}(w - d_e - e_e + s)$$

$$g_e - g_c = \tfrac{1}{2}(d_c - d_e + e_c - e_e)$$
$$= \tfrac{1}{2}(d_c - d_e) + \Delta$$

wherein:

"c"  subscript indicates the concentric system
"e"  subscript indicates the eccentric system
"g"  indicates ground clearance
"e"  indicates diameter of opening in innermost cover plate
"d"  indicates outer diameter of opening in innermost cover plate
"s"  indicates outer diameter of sleeve on axle
"w"  indicates outer diameter of wheel
"$\Delta$"  indicates increased wheel clearance of eccentric suspension system with respect to concentric system.

The above equations assume equal suspension travel and having the center of the openings in the side walls at the same relative locations with respect to the extremity of the side wall.

Various modifications and variations will no doubt occur to those skilled in the various arts to which this invention pertains. For example, the resilient connection may extend inwardly from the side walls to connection with the axle instead of, as shown, extending outwardly. Further, the outer dimensions of the cover plates and elastomeric members may be varied from that disclosed herein.

Industrial applicability

This eccentric wheel suspension can be used in conjunction with relatively hard, high capacity tires often used in transport devices such as in-plant dollies, carts and industrial lift trucks.

**Claims**

1. A wheel suspension for an object having a suspension support means (14) for attaching said wheel suspension to the object, an elongated axle (12) for providing an axis of rotation, a wheel (11) rotationally mounted on the axle (12), said wheel suspension including resilient means (50) for coupling the axle (12) to the suspension support means (14), said resilient means (50) including a plurality of elastomer members (60, 61, 62) and connecting means (56, 57) for attaching adjacent elastomer members to each other, said connecting means (56, 57) being deflectable by said axle (12) so that a shear deformation occurs to said elastomer members, characterised by said connecting means (56, 57) having an eccentric configuration with respect to each other so that radial axle movement to a point of interference is a different distance in at least two opposing directions.

2. A wheel suspension as claimed in Claim 1, wherein said elastomer members (60, 61, 62) and said connecting members (56, 57) are alternately positioned along the axial length of the axle to form a deflectable member, a first extremity of said deflectable member relatively closely following the radial movement of the axle (12) with respect to the suspension support means (14), a second extremity of said deflectable member following the suspension support means, thus being relatively movable with respect to said first extremity, said deflectable member intermediate said first and second extremities decreasingly following relative movement between the axle and the suspension support means with increasing distance from said first extremity toward said second extremity so as to provide a nonlinear suspension for the wheel with increasing relative displacement between the axle and the suspension support means successively applying a more than proportionately increasing shear force to elastomer members progressively closer to said second extremity as a result of said connecting means being successively positioned adjacent said axle to limit shear deformation of successive elastomer members, successive connecting members from said first extremity to said second extremity having an eccentricity with respect to an adjacent connecting member.

3. A wheel suspension as claimed in Claim 2, wherein said connecting means (56, 57) are metal disks with central, axial openings, the outer diameter of said disks being about equal to the outer diameter of an adjacent elastomer member in the direction of the side wall, and the inner diameter of said disks being substantially equal to the inner diameter of an adjacent elastomer in the direction away from the side wall, the edges of said central openings of said disks being positioned to be aligned substantially at one circumferential point around said central openings so that the axle can be positioned adjacent such circumferential point for travel away from such circumferential point.

7

4. A wheel suspension as claimed in Claim 3, wherein said elastomer members positioned at progressively increasing distances from the side walls have a decreasing inner diameter and the inner diameter of each of said elastomer members is substantially constant across the axial extent of each of said elastomer members, the inner diameters of adjacent elastomer members being eccentric with respect to one another.

5. A wheel suspension as claimed in Claim 1, wherein said suspension support means includes a pair of spaced side walls having opposed openings; an elongated axle extending between said side walls and through said opposed openings so that said axle has end portions adjacent said side walls, said connecting means including a pair of spaced cover plates (56, 57) having an elastomer member (61) therebetween and attached to said cover plates, a first of said cover plates being coupled to said axle and a second of said cover plates being coupled to one of said side walls so that movement of said axle in a radial direction with respect to said side walls applies a shear force to said elastomer and a force resisting deflection to the wheel suspension; said first of said cover plates is annular with concentric first inner and outer diameters, said first inner diameter being substantially equal to the diameter of said axle so that radial movement of said axle causes corresponding radial movement of said first cover plate thereby applying a shear force to said elastomer member and thus resisting motion of said axle with respect to said side plate; said second of said cover plates is annular with concentric second inner and outer diameters, said second inner diameter being sufficiently larger than the diameter of said axle to permit some radial movement of said axle which movement is limited by interference with the innermost boundary of said opening in said side plate and said inner diameter of said second cover plates; and said first and second cover plates (56, 57) being positioned eccentrically of each other so that the centre of said first cover plate is radially offset from the centre of said second cover plate.

6. A wheel suspension as claimed in Claim 5, wherein said elastomer member (61) has an outer boundary extending between the outer diameter of said first and second cover plates and an inner diameter extending between the inner diameter of said first and second cover plates so that said elastomer member is generally disk shaped with an inside diameter eccentric to each other.

7. A wheel suspension as claimed in Claim 5, further comprising an adjustable compression means (20) axially positionable along said axle to provide a compressive force on said elastomer member thereby reinforcing the bonding force between said elastomer and said cover plates.

8. A wheel suspension as claimed in Claim 1 wherein said elastomer members and connecting members of said connecting means are alternately positioned along the axial length of said axle to form a deflectable member a first extremity of said deflectable member relatively closely following the radial movement of said axle with respect to said suspension support means; a second extremity of said deflectable member following said suspension support means, thus being relatively movable with respect to said deflectable member intermediate said first and second extremities; said deflectable member decreasingly following relative movement between said axle and said suspension support means with increasing distance from said first extremity toward said second extremity so as to provide a nonlinear suspension for said wheels with increasing relative displacement between said axle and said suspension support means successively applying an increasing shear force to elastomer members progressively closer to said second extremity so that said connecting means are successively positioned adjacent said axle to limit shear deformation of successive ones of said elastomer members; and said connecting members being generally disk shaped, having concentric inside and outside diameters, and being located eccentrically with respect to other connecting members, the centre of a first connecting member being offset from the centre of an adjacent second connecting member which is closer to said second extremity than said first connecting member, and said elastomer members having a generally eccentric central opening.

9. A wheel suspension as claimed in Claim 8, wherein said resilient means and said suspension support means include an alignment means so as to orient the direction of eccentric offset of said resilient means on said suspension support means.

10. An eccentric wheel suspension as claimed in Claim 8, wherein said suspension support means is a pair of spaced side walls having opposed openings for passing said axle so that said axle extends beyond said side walls and said deflectable member having a first extremity adjacent the outer extremity of said axle and said second extremity adjacent said side wall, said elastomer members being generally circular with an offset, eccentric opening for passing said axle, and said connecting means are metal disks with central, axial concentric openings, the outer diameter of said disks being generally equal to the outer diameter of and adjacent elastomer member in the direction of said side wall, the inner diameter of said disks generally defining the boundary of the offset, eccentric openings of said elastomer members.

11. A wheel suspension as claimed in Claim 10, wherein said resilient means includes at least two elastomer members with eccentric openings therein, each being bounded by a pair of metal disks, at least one of said disks each being adjacent to two of said elastomer members and two of said disks being adjacent to only one of said elastomer members.

12. A wheel suspension as claimed in Claim 10, wherein said elastomer members positioned at progressively increasing distances from said side walls have a decreasing inner diameter and the inner diameter of each of said elastomer members is substantially constant across the axial extent of each of said elastomer members.

# 0 104 714

13. A wheel suspension as claimed in Claim 10, wherein the outer diameter of each of said elastomer members decreases with increasing distance from said side walls, the outer diameter of each of said elastomer members being substantially constant across the axial extent of each of said elastomer members.

14. A wheel suspension as claimed in Claim 10, wherein the innermost disk adjacent said side walls has a flange adjacent the inner diameter of said innermost disk which extends into said opening of said side walls thereby providing additional support for said innermost disk.

15. A wheel suspension as claimed in Claim 10, further comprising a compression means for reinforcing the bonding force between said metal disks and said elastomer members, said compression means including a nut (20) in a threaded engagement with said axle and longitudinally movable along said axle so as to apply a force against the outermost of said disks thereby applying a force to said elastomer between said side wall and said outermost disk.

16. A wheel suspension as claimed in Claim 10, further including an indentation in the inner disk adjacent the side wall a protrusion extending from said side wall for engaging said indentation thereby aligning said inner disk with respect to said side wall so that the direction of the travel of said axle is parallel to a line connecting the centres of said disks.


**Patentansprüche**

1. Eine Radaufhängung für einen Gegenstand, mit einer Aufhängungsträgervorrichtung (14) zur Befestigung der genannten Radaufhängung am Gegenstand, einer länglich ausgeführten Achse (12) zur Schaffung einer Drehachse, einem Rad (11), das in drehbar Ausführung an der Achse (12) montiert ist, wobei zur genannten Radaufhängung eine elastische Vorrichtung (50) gehört, über die die Achse (12) mit der Aufhängungsträgervorrichtung (14) verbunden ist, wobei zur genannten elastischen Vorrichtung (50) eine Vielzahl von Elastomerelementen (60, 61, 62) und Verbindungsvorrichtungen (56, 57) zur Befestigung angrenzender Elastomerelemente untereinander gehören, und wobei die genannten Verbindungsvorrichtungen (56, 57) so durch die genannte Achse (12) abgelenkt werden können, daß die genannten Elastomerelemente einer Scherverformung unterliegen, dadurch gekennzeichnet, daß die genannten Verbindungsvorrichtungen (56, 57) exzentrisch zueinander angeordnet sind, so daß die radiale Achsenbewegung zu einem Kollisionspunkt in zumindest zwei entgegengesetzten Richtungen mit unterschiedlichem Abstand erfolgt.

2. Eine Radaufhängung gemäß Anspruch 1, wobei die genannten Elastomerelemente (60, 61, 62) und die genannten Verbindungselemente (56, 57) abwechselnd entlang der axialen Länge der Achse angeordnet sind, um so ein ablenkbares Element zu bilden, wobei ein erstes Ende des genannten ablenkbaren Elements mit relativ geringer Abweichung der radialen Bewegung der Achse (12) im Verhältnis zur Aufhängungsträgervorrichtung (14) folgt, ein zweites Ende des genannten ablenkbaren Elements der Aufhängungsträgervorrichtung folgt, so daß eine relative Beweglichkeit im Verhältnis zum genannten ersten Ende gegeben ist, wobei das genannte ablenkbare Element zwischen den genannten ersten und zweiten Enden in abnehmender Weise der relativen Bewegung zwischen der Achse und der Aufhängungsträgervorrichtung folgt, und zwar mit zunehmendem Abstand vom genannten ersten Ende in Richtung auf das genannte zweite Ende, um so für eine nicht lineare Aufhängung des Rads mit zunehmender relativer Verschiebung zwischen der Achse und der Aufhängungsträgervorrichtung zu sorgen, so daß nach und nach eine mehr als proportional ansteigende Scherkraft auf die Elastomerelemente einwirkt, wobei deshalb eine zunehmende Annäherung an das genannte zweite Ende erfolgt, weil die genannten Verbindungsvorrichtungen in aufeinanderfolgender Weise direkt an der genannten Achse eine solche Anordnung einnehmen, daß dadurch die Scherverformung der aufeinanderfolgenden Elastomerelemente eine Begrenzung erfährt, wobei die aufeinanderfolgenden Verbindungselemente zwischen dem genannten ersten Ende und dem genannten zweiten Ende in Verhältnis zu einem angrenzenden Verbindungselement exzentrisch ausgeführt sind.

3. Eine Radaufhängung gemäß Anspruch 2, wobei es sich bei den genannten Verbindungsvorrichtungen (56, 57) um Metallscheiben mit zentral angeordneten, axialen Öffnungen handelt, wobei der Außendurchmesser der genannten Scheiben in etwa dem Außendurchmesser eines angrenzenden Elastomerelements in der der Seitenwand zugekehrten Richtung entspricht, und wobei der Innendurchmesser der genannten Scheiben im wesentlichen dem Innendurchmesser eines angrenzenden Elastomerelements in der der Seitenwand abgekehrten Richtung entspricht, wobei die Kanten der genannten, zentral angeordneten Öffnungen der genannten Scheiben so vorgesehen sind, daß sie im wesentlichen an einem Umfangspunkt so um die genannten, zentral angeordneten Öffnungen herum ausgerichtet sind, daß die Achse direkt an einem derartigen Umfangspunkt in solcher Weise angeordnet werden kann, daß sie sich von einem derartigen Umfangspunkt wegbewegen kann.

4. Eine Radaufhängung gemäß Anspruch 3, wobei die genannten Elastomerelemente, die mit zunehmend größeren Abständen von den Seitenwänden angeordnet sind, einen abnehmenden Innendurchmesser aufweisen, wobei der Innendurchmesser eines jeden der genannten Elastomerelemente im Axialbereich eines jeden der genannten Elastomerelemente im wesentlichen konstant bleibt, und wobei die Innendurchmesser der angrenzenden Elastomerelemente im Verhältnis zueinander exzentrisch ausgeführt sind.

9

5. Eine Radaufhängung gemäß Anspruch 1, wobei zur genannten Aufhängungsträgervorrichtung ein Paar mit Abstand angeordnete Seitenwände mit gegenüberliegenden Öffnungen gehören; wobei ein länglich ausgeführte Achse so zwischen den genannten Seitenwänden und durch die genannten, gegenüberliegenden Öffnungen hindurch verläuft, daß die genannte Achse an die genannten Seitenwände angrenzende Endabschnitte besitzt, wobei zu den genannten Verbindungsvorrichtungen ein Paar mit Abstand angeordnete Abdeckplatten (56, 57) gehören, die ein dazwischen angeordnetes Elastomerelement (61) aufweisen, das an den genannten Abdeckplatten befestigt ist, wobei eine erste der genannten Abdeckplatten mit der genannten Achse und eine zweite der genannten Abdeckplatten mit einer der genannten Seitenwände so verbunden sind, daß aufgrund der Bewegung der genannten Achse in radialer Richtung im Verhältnis zu den genannten Seitenwänden eine Scherkraft auf das genannte Elastomerelement einwirkt und eine Kraft der Verformung der Radaufhängung entgegenwirkt; wobei die genannte erste der genannten Abdeckplatten ringförmig ausgebildet ist und konzentrische erste Innen- und Außendurchmesser aufweist, wobei der genannte erste Innendurchmesser im wesentlichen dem Durchmesser der genannten Achse entspricht, so daß die radiale Bewegung der genannten Achse eine entsprechende radiale Bewegung der genannten ersten Abdeckplatte bewirkt, wodurch eine Scherkraft auf das genannte Elastomerelement einwirkt und somit der Bewegung der genannten Achse im Verhältnis zur genannten Seitenplatte entgegenwirkt; wobei die genannte zweite der genannten Abdeckplatten ringförmig ausgebildet ist und konzentrische zweite Innen- und Außendurchmesser aufweist, wobei der genannte zweite Innendurchmesser in ausreichender Weise größer als der Durchmesser der genannten Achse ausgeführt ist, um so eine gewisse radiale Bewegung der genannten Achse zu ermöglichen, wobei diese Bewegung durch eine Kollision mit dem innersten Rand der genannten Öffnung in der genannten Seitenplatte und dem genannten Innendurchmesser der genannten zweiten Abdeckplatten eine Begrenzung erfährt; und wobei die genannten ersten und zweiten Abdeckplatten (56, 57) exzentrisch zueinander angeordnet sind, so daß die Mitte der gennanten ersten Abdeckplatte im Verhältnis zur Mitte der genannten zweiten Abdeckplatte radial versetzt ist.

6. Eine Radaufhängung gemäß Anspruch 5, wobei das genannte Elastomerelement (61) einen äußeren Rand, der zwischen dem Außendurchmesser der genannten ersten und zweiten Abdeckplatten verläuft, sowie einen Innendurchmesser aufweist, der zwischen dem Innendurchmesser der genannten ersten und zweiten Abdeckplatten verläuft, so daß das genannte Elastomerelement im allgemeinen scheibenförmig ausgebildet ist, wobei der Innendurchmesser jeweils exzentrisch angeordnet ist.

7. Eine Radaufhängung gemäß Anspruch 5, weiterhin umfassend eine einstellbare Druckvorrichtung (20), die axial entlang der genannten Achse so angeordnet werden kann, daß eine Druckkraft auf das genannte Elastomerelement einwirkt, wodurch die verbindende Kraft zwischen dem genannten Elastomerelement und den genannten Abdeckplatten verstärkt wird.

8. Eine Radaufhängung gemäß Anspruch 1, wobei die genannten Elastomerelemente und die Verbindungselemente der genannten Verbindungsvorrichtungen abwechselnd über die axiale Länge der genannten Achse verteilt angeordnet sind, um so ein ablenkbares Element zu schaffen, wobei ein erstes Ende des genannten ablenkbaren Elements mit relativ geringer Abweichung der radialen Bewegung der genannten Achse im Verhältnis zur genannten Aufhängungsträgervorrichtung folgt; wobei ein zweites Ende des genannten ablenkbaren Elements der genannten Aufhängungsträgervorrichtung folgt, so daß eine relative Beweglichkeit im Verhältnis zum genannten ablenkbaren Element zwischen den genannten ersten und zweiten Enden gegeben ist; wobei das genannte ablenkbare Element in abnehmender Weise der relativen Bewegung zwischen der genannten Achse und der genannten Aufhängungsträgervorrichtung mit wachsendem Abstand vom genannten ersten Ende in Richtung auf das genannte zweite Ende folgt, um so für eine nicht lineare Aufhängung der genannten Räder mit zunehmender relativer Verschiebung zwischen der genannten Achse und der genannten Aufhängungsträgervorrichtung zu sorgen, so daß nach und nach eine ansteigende Scherkraft auf die Elastomerelemente einwirkt, wobei eine zunehmende Annäherung an das genannte zweite Ende erfolgt, so daß die genannten Verbindungsvorrichtungen in aufeinanderfolgender Weise direkt an der genannten Achse eine solche Anordnung einnehmen, daß dadurch die Scherverformung der genannten aufeinanderfolgenden Elastomerelemente eine Begrenzung erfährt; und wobei die genannten Verbindungselemente im allgemeinen scheibenförmig ausgebildet sind, konzentrische Innen- und Außendurchmesser aufweisen und im Verhältnis zu anderen Verbindungselementen exzentrisch angeordnet sind, wobei die Mitte eines ersten Verbindungselements im Verhältnis zur Mitte eines angrenzenden zweiten Verbindungselements versetzt angeordnet ist, das näher zum genannten zweiten Ende als das genannte erste Verbindungselement vorgesehen ist, und wobei die genannten Elastomerelemente eine im allgemeinen exzentrische, zentral angeordnete Öffnung aufweisen.

9. Eine Radaufhängung gemäß Anspruch 8, wobei zur genannten elastischen Vorrichtung und zur genannten Aufhängungsträgervorrichtung eine Einstellvorrichtung gehört, um so die Ausrichtung der exzentrischen Versetzung der genannten elastischen Vorrichtung an der genannten Aufhängungsträgervorrichtung vornehmen zu können.

10. Eine exzentrische Radaufhängung gemäß Anspruch 8, wobei es sich bei der genannten Aufhängungsträgervorrichtung um ein Paar mit Abstand angeordnete Seitenwände handelt, die gegenüberliegende Öffnungen für die Durchführung der genannten Achse aufweisen, so daß sich die genannte Achse über die genannten Seitenwände hinaus erstreckt, und wobei das genannte ablenkbare Element ein erstes Ende direkt am äußeren Ende der genannten Achse aufweist und das genannte zweite Ende direkt an der genannten Seitenwand angeordnet ist, wobei die genannten Elastomerelemente im allgemeinen kreisförmig aufgeführt sind und eine versetzte, exzentrische Öffnung zur Durchführung der genannten Achse aufweisen, und wobei es sich bei den genannten Verbindungsvorrichtungen um Metallscheiben mit zentral angeordneten, axialen, konzentrischen Öffnungen handelt, wobei der Außendurchmesser der genannten Scheiben im allgemeinen dem Außendurchmesser eines angrenzenden Elastomerelements in Richtung der genannten Seitenwand entspricht, wobei der Innendurchmesser der genannten Scheiben im allgemeinen den Rand der versetzten, exzentrischen Öffnungen der genannten Elastomerelemente festlegt.

11. Eine Radaufhängung gemäß Anspruch 10, wobei zur genannten elastischen Vorrichtung zumindest zwei Elastomerelemente mit exzentrischen Öffnungen gehören, wobei die Abgrenzung jeweils durch eine Paar Metallscheiben erfolgt, und wobei zumindest eine der genannten Scheiben jeweils direkt an zwei der genannten Elastomerelemente und zwei der genannten Scheiben direkt an nur einem der genannten Elastomerelemente angeordnet sind.

12. Eine Radaufhängung gemäß Anspruch 10, wobei die genannten Elastomerelemente, die mit zunehmend wachsenden Abständen von den genannten Seitenwänden angeordnet sind, einen abnehmenden Innendurchmesser aufweisen, und wobei der Innendurchmesser eines jeden der genannten Elastomerelemente im axialen Bereich eines jeden der genannten Elastomerelemente im wesentlichen konstant bleibt.

13. Eine Radaufhängung gemäß Anspruch 10, wobei der Außendurchmesser eines jeden der genannten Elastomerelemente mit zunehmenden Abstand von den genannten Seitenwänden kleiner wird, und wobei der Außendurchmesser eines jeden der genannten Elastomerelemente im axialen Bereich eines jeden der genannten Elastomerelemente im wesentlichen konstant bleibt.

14. Eine Radaufhängung gemäß Anspruch 10, wobei die innerste Scheibe direkt an den genannten Seitenwänden einen Flansch in direkter Nähe des Innendurchmessers der genannten innersten Scheibe aufweist, der sich in die genannte Öffnung der genannten Seitenwände erstreckt und dadurch für eine zusätzliche Abstützung der genannten innersten Scheibe sorgt.

15. Eine Radaufhängung gemäß Anspruch 10, weiterhin umfassend eine Druckvorrichtung zur Verstärkung der verbindenden Kraft zwischen den genannten Metallscheiben und den genannten Elastomerelementen, wobei die genannte Druckvorrichtung eine Mutter (20) umfaßt, die in einem Gewindeeingriff mit der genannten Achse steht, und wobei eine Bewegung in Längsrichtung entlang der genannten Achse dafür sorgt, daß eine Kraft auf die äußerste der genannten Scheiben und dadurch eine Kraft auf das genannte Elastomerelement zwischen der genannten Seitenwand und der genannten äußersten Scheibe einwirkt.

16. Eine Radaufhängung gemäß Anspruch 10, weiterhin umfassend eine Vertiefung in der inneren Scheibe direkt an der Seitenwand, wobei sich ein Vorsprung von der genannten Seitenwand aus erstreckt, um für einen Eingriff in die genannte Vertiefung zu sorgen, wodurch die genannte innere Scheibe im Verhältnis zur genannten Seitenwand eine solche Ausrichtung erfährt, daß die Richtung der Bewegung der genannten Achse parallel zu einer Linie erfolgt, die die Mitten der genannten Scheiben verbindet.

**Revendications**

1. Suspension de roue pour un objet ayant des moyens de support de suspension (14) pour la fixer à l'objet, un axe allongé (12) destiné à servir d'un axe de rotation, une roue (11) trouvant sur l'axe (12), cette suspension de roue comprenant des moyens élastiques (50) qui sont destinés à accoupler l'axe (12) aux moyens de supports de suspension (14), et qui comprennent une série d'éléments en élastomère (60, 61, 62) et des moyens de liaison (56, 57) qui sont prévus pour réunir les uns aux autres les moyens élastomères voisins et pour être déformés par cet axe (12) de manière qu'il se produise une déformation par cisaillement sur lesdits éléments en élastomère et étant caractérisée en ce que lesdits moyens de liaison (56, 57) ont une configuration excentrique l'un par rapport à l'autre de sorte qu'un déplacement radial de l'axe jusqu'à un point de rencontre présente des distances de valeurs différentes dans au moins deux directions opposées.

2. Suspension de roue selon la revendication 1, dans laquelle lesdits éléments en élastomère (60, 61, 62) et lesdits éléments de liaison (56, 57) alternent longitudinalement le long de l'axe pour former un élément déformable, une première extrémité dudit élément déformable suivant relativement étroitement le déplacement radial de l'axe (12) par rapport aux moyens supports de suspension (14), une deuxième extrémité dudit élément déformable suivant les moyens supports de suspension, de sorte qu'ils sont ainsi aptes de se déplacer relativement à ladite première extrémité, ledit élément déformable intermédiaire entre lesdites première et deuxième extrémités accompagnant le déplacement relatif de l'axe et des moyens de support de suspension dans une mesure qui décroît avec l'acroissement de la distance allant de ladite première extrémité vers ladite deuxième extrémité de manière à réaliser une suspension non linéaire pour la roue avec l'accroissement du déplacement relatif entre l'axe et les moyens de support de suspension, en appliquant successivement une force de cisaillement qui croît plus que proportionnellement aux éléments en élastomère qui sont progressivement plus rapprochés de ladite deuxième extrémité, en résultat du fait que lesdits moyens de liaison se placent successivement contre ledit axe pour limiter la déformation de cisaillement des éléments en élastomère successifs, les éléments de liaison successifs, de ladite première

11

**0 104 714**

extrémité à ladite deuxième extrémité, présentant chacun une excentricité par rapport à un élément de liaison voisin.

3. Suspension de roue selon la revendication 2, dans laquelle lesdits moyens de liaison (56, 57) sont des disques métalliques présentant des ouvertures axiales les centrales, le diamètre extérieur desdits disques étant à peu près égal au diamètre extérieure d'un élément en élastomère voisin dans le sens allant vers la paroi latérale, et le diamètre intérieur desdits disques étant à peu près égal au diamètre intérieur d'un élément voisin dans le sens s'éloignant de la paroi latérale, les bords desdites ouvertures centrales desdits disques étant placés pour être alignés sur un point de la circonférence entourant lesdites ouvertures centrales de manière que l'axe puisse être placé au voisinage de ce point de la circonférence pour se déplacer dans le sens qui l'éloigne de ce point de la circonférence.

4. Suspension de roue selon la revendication 3, dans laquelle lesdits éléments en élastomère sont situés à des distances progressivement croissantes des parois latérales ont un diamètre intérieur décroissant et le diamètre intérieur de chacun des éléments en élastomère est constant sur la dimension axiale de chacun desdits éléments en élastomère, les diamètres intérieurs des éléments en élastomère contigüs étant excentrés l'une par rapport à l'autre.

5. Suspension de roue selon la revendication 1, dans laquelle lesdits moyens de support de suspension comprennent deux parois latérales distantes ayant des ouvertures opposées, un axe allongé qui s'étend entre lesdites parois latérales et traverse lesdites ouvertures opposées, de sorte que ledit axe possède des parties d'extrémités contigües auxdites parois latérales, lesdits moyens de liaison comprenant un couple de plaques de recouvrement espacées (56, 57) ayant un élément en élastomère (61) interposé entre elles et qui leur est fixé, une première desdites plaques de recouvrement étant accouplée audit axe et une seconde desdites plaques de recouvrement étant accouplée à l'une desdites parois latérales, de sorte qu'un déplacement dudit axe dans une direction radiale par rapport auxdites parois latérales communique une force de cisaillement audit élastomère et une force s'opposant à la compression à la suspension de roue; ladite première desdites plaques de recouvrement est annulaire, avec desdites premières circonférences intérieure et extérieure concentriques, ladite première circonférence intérieure étant égale au diamètre dudit axe, de sorte qu'in déplacement radial dudit axe provoque un déplacement radial correspondant de ladite première plaque de recouvrement, en communiquant ainsi une force de cisaillement audit élément en élastomère et en résistant ainsi au déplacement dudit axe par rapport à ladite plaque latérale; ladite seconde desdites plaques de recouvrement est annulaire avec des secondes circonférences intérieure et extérieure concentriques; ladite seconde circonférence intérieure étant suffisamment plus grande que le diamètre dudit axe pour permettre un certain déplacement radial dudit axe, lequel déplacement est limité par la rencontre avec la limite extrême intérieure de ladite ouverture de ladite plaque latérale et avec ladite circonférence intérieure de ladite seconde plaque de recouvrement; et lesdites première et seconde plaques de recouvrement (56, 57) étant excentrées l'une par rapport à l'autre, de sorte que le centre de ladite première plaque de recouvrement est décalé radialement par rapport au centre de ladite deuxième plaque de recouvrement.

6. Suspension de roue selon la revendication 5, dans laquelle ledit élément en élastomère (61) présente une limite extérieure qui s'étend entre les circonférences extérieures desdites première et seconde plaques de recouvrement et une limite intérieure qui s'étend entre les circonférences intérieures desdites première et deuxième plaques de recouvrement de sorte que ledit élément en élastomère présente d'une façon générale la forme de disque avec un diamètre intérieur excentré relativement.

7. Suspension de roue selon la revendication 5, comprenant en outre des moyens de compression réglables (20) qui peuvent être placés axialement le long dudit axe pour exercer une force de compression sur ledit élément en élastomère, en renforçant ainsi la force de liaison entre ledit élastomère et lesdites plaques de recouvrement.

8. Suspension de roue selon la revendication 1, dans laquelle lesdits éléments en élastomère et éléments de liaison desdits moyens de liaison alternent longitudinalement le long dudit axe pour former un élément déformable, une première extrémité dudit élément déformable suivant relativement étroitement le déplacement radiale dudit axe par rapport auxdits moyens de support de la suspension; une seconde extrémité dudit élément deformable accompagnant lesdits moyens de support de suspension, en étant relativement mobiles par rapport audit élément déformable entre lesdites première et deuxième extrémités; ledit élément déformable accompagnant le déplacement relatif dudit axe et desdits moyens de support de suspension dans une mesure qui décroît avec l'accroissement de la distance de ladite première extrémité en se rapprochant de ladite seconde extrémité, de manière à donner naissance à une suspension non linéaire pour lesdites roues dans laquelle l'accroissement du déplacement relatif entre ledit axe et lesdits moyens support de suspension engendre successivement une force de cisaillement croissante aux éléments en élastomère au fur et à mesure qu'on se rapproche progressivement de ladite seconde extrémité, de sorte que lesdits moyens de liaison viennent se placer successivement à proximité dudit axe, pour limiter la déformation par cisaillement desdits éléments élastomères successifs, lesdits éléments de liaison étant d'une façon générale en forme de disque, ayant des circonférences intérieure et extérieure concentriques et étant disposés excentrés par rapport aux autres éléments de liaison, le centre d'un premier élément de liaison étant décalé par rapport au centre d'un deuxième élément de liaison contigu qui est plus rapproché de ladite seconde extrémité que ledit premier élément de liaison, et lesdits éléments en élastomère ayant une ouverture centrale généralement excentrée.

12

9. Suspension de roue selon la revendication 8, dans laquelle lesdits moyens élastiques et lesdits moyens de support de suspension comprennent des moyens d'alignement de manière à orienter la direction du décalage excentré desdits moyens élastiques sur lesdits moyens de support de suspension.

10. Suspension excentrique pour roue selon la revendication 8, dans laquelle lesdits moyens de support de suspension comprennent deux parois latérales distantes ayant des ouvertures opposées pour le passage dudit axe, de sorte que ledit axe déborde au-delà desdites parois latérales, et ledit élément déformable ayant une première extrémité adjacente à l'extrémité extérieure dudit axe et ladite seconde extrémité adjacente à ladite paroi latérale, lesdits éléments en élastomère étant de forme générale circulaire avec une ouverture décalée, excentrée, pour le passage dudit axe et lesdits moyens de liaison sont des disques métalliques avec des ouvertures centrales, axiales, concentriques, le diamètre extérieur desdits disques étant égal au diamètre extérieur d'un élément en élastomère voisin, dans le sens de ladite paroi latérale, la circonference intérieure desdits disques définissant d'une façon générale la limite desdites ouvertures excentrées décalées desdits éléments en élastomère.

11. Suspension de roue selon la revendication 10, dans laquelle lesdits moyens élastiques comprennent au moins deux éléments en élastomère présentant des ouvertures excentées, chacun étant limité par une paire de disques métalliques, au moins l'un desdits disques étant contigus à deux desdits éléments en élastomère et deux desdits disques étant voisins d'un seul desdits éléments en élastomère.

12. Suspension de roue selon la revendication 10, dans laquelle lesdits éléments en élastomère placés à des distances progressivement croissantes desdites parois latérales possèdent un diamètre intérieur décroissant et le diamètre intérieur de chacun desdits éléments en élastomère est constant sur la longueur axiale de chacun desdits éléments en élastomère.

13. Suspension de roue selon la revendication 10, dans laquelle le diamètre extérieur de chacun desdits éléments en élastomère décroît avec l'accroissement de ladite distance auxdites parois latérales, le diamètre extérieur de chacun desdits éléments en élastomère étant constant sur la longueur axiale de chacun desdits éléments en élastomère.

14. Suspension de roue selon la revendication 10, dans laquelle le disque extrême intérieur adjacent auxdites parois latérales possède un collet proche au diamètre intérieur dudit disque extrême intérieur qui est engagé dans ladite ouverture desdites parois latérales, servant ainsi de support supplémentaire pour ledit disque extrême intérieur.

15. Suspension de roue selon la revendication 10, comprenant en outre des moyens de compression pour renforcer la force de liaison entre lesdits disques métalliques et lesdits éléments en élastomère, lesdits moyens de compression comprenant un écrou (20) en prise par vissage avec ledit axe et mobile longitudinalement le long dudit axe de façon à appliquer une force contre celui desdits disques qui est le plus à l'extérieur, en communiquant ainsi une force audit élastomère compris entre ladite paroi latérale et ledit disque extrême le plus à l'extérieur.

16. Suspension de roue selon la revendication 10, comprenant en outre une indentation ménagée dans le disque intérieur voisin de la paroi latérale, une protubérance faisant saillie sur ladite paroi latérale pour coopérer avec ladite indentation afin d'aligner ainsi ledit disque intérieur par rapport à ladite paroi latérale de façon que la direction de la course dudit axe soit parallèle à une ligne qui joint les centres desdits disques.

FIG. 1.

*Prior Art*

FIG. 4A.

FIG. 4B.

FIG. 3.

FIG. 2.

FIG. 5A. (Prior Art)

FIG. 5B.

FIG. 6A. (Prior Art)

FIG. 6B.

*Prior Art*

FIG. 7a.                    FIG. 7b.